# EUROPEAN PATENT APPLICATION

(11) **EP 1 757 960 A1**
(43) Date of publication of application: **28.02.2007**
(21) Application number: 05026855.6
(22) Date of filing: 08.12.2005
(51) Int. Cl.: G02B 5/30, G02B 6/00, G02B 5/04, G02B 5/12

(54) **Prism sheet and backlight unit employed in a liquid crystal display**

(30) Priority: 26.08.2005 KR 2005078637
(71) Applicant: LG ELECTRONICS INC., Seoul 150-010 (KR)
(72) Inventor: Lee, Seoung Ho, Shinan Apt 110-1403, Kimpo-si Gyeonggi-do 415-733 (KR); Lee, Weon Woong, Jung-gu Incheon 400-102 (KR)
(74) Representative: von Hellfeld, Axel

(57) **Abstract**

The present invention relates to a prism sheet for performing the function of polarization. The prism sheet (334) comprises a prism (410) and a polarization film (420). The polarization film is formed by depositing a first layer (422) and a second layer (424) on the prism, wherein the first layer and the second layer have different refractive index. The prism sheet includes a multilayered polarization film, and so transmits some of a light incident thereto by the polarization film.

## Description

### BACKGROUND OF THE INVENTION

### 1. Field of the Invention

The present invention relates to a prism sheet and a backlight unit employed in a liquid crystal display. Particularly, the present invention relates to a prism sheet and a backlight unit employed in a liquid crystal display for performing the function of polarization division.

### 2. Description of the Related Art

A liquid crystal display (hereinafter, referred to as "LCD") transforms electric information outputted from various devices into visual information using the change of the permeability of liquid crystals in accordance with a voltage applied from the outside, and then displays an image using the visual information. Since the LCD is not a self-light emitting device, the LCD displays an image using a light provided from a backlight unit (hereinafter, referred to as "BLU") located at its backside.

The BLU includes a direct lighting type BLU in which a cold cathode fluorescent lamp (hereinafter, referred to as "CCFL") is located under a LCD panel and an edge-light type BLU in which the CCFL is located at side of a light guiding plate.

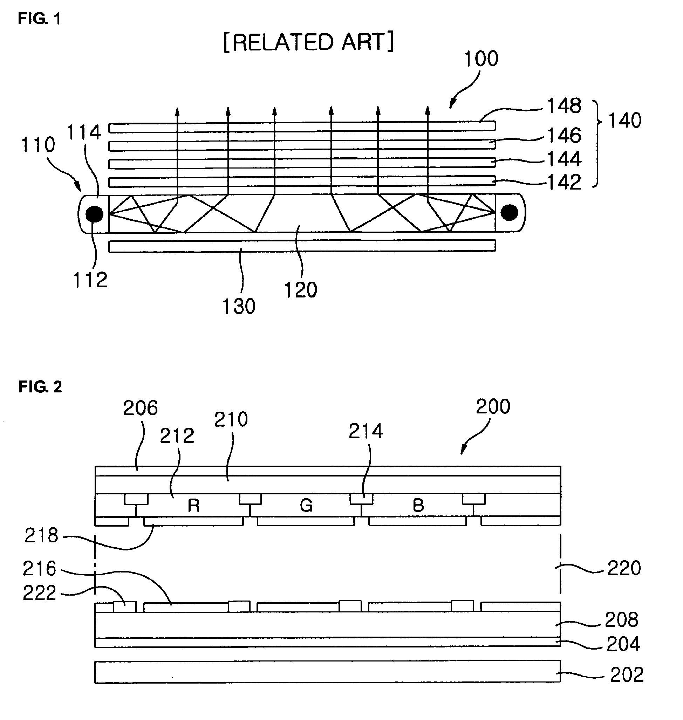

FIG. 1 is a sectional view illustrating a backlight unit included in a liquid crystal display.

In FIG. 1, the BLU 100 includes a light source unit 110, a light guiding plate 120, a reflection sheet 130 and an optical film 140.

The light source unit 110 includes at least one CCFL 112 and a reflection plate 114.

The CCFL 112 emits a light having a certain wavelength.

The light emitted by the CCFL 112 is reflected by the reflection plate 114 and the reflection sheet 130, and then the reflected light is uniformly diffused through the whole light guiding plate 120 as shown in FIG. 1.

The optical film 140 includes a diffusion sheet 142, a prism sheet 144, a protection sheet 146, and a reflective polarizer film layer (148).

The light diffused through the light guiding plate 120 is transmitted through the diffusion sheet 142.

The diffusion sheet 142 diffuses or condenses the light outputted from the light guiding plate 120, and so a light transmitted through the diffusion sheet 142 has uniform brightness, and a view angle of the BLU 100 is increased.

The brightness of the light transmitted through the diffusion sheet 142 is rapidly reduced, and accordingly the prism sheet 144 is employed on the diffusion sheet 142 so as to prevent the reduction of the brightness. The prism sheet 144 condenses the light outputted from the diffusion sheet 142, and so the brightness of the light condensed by the prism sheet 144 is enhanced in the range of effective view angle.

The protection sheet 146 is located over the prism sheet 144 to protect the prism sheet 144 from dust, etc., and enlarges a view angle narrowed by the prism sheet 144.

The LCD (not shown) located over the optical film 140 transmits some of a light emitted from the optical film 140. For example, P wave is transmitted through the LCD, and S wave is absorbed by the LCD. Accordingly, the reflective polarizer film layer 148 is employed in the optical film 140 in order to utilize the S wave to be absorbed by the LCD.

The reflective polarizer film layer 148 reflects the S wave of a light diffused by the protection sheet 146 in the direction of the light guiding plate 120, and provides the P wave to the LCD. Here, the reflected S wave is reflected again by the light guiding plate 120 or the reflection sheet 130. In this case, the S wave reflected by the reflective polarizer film layer 148 is changed into a light including P wave and S wave by reflected again. The light reflected again by the light guiding plate 120 or the reflection sheet 130 is incident to the reflective polarizer film layer 148 through the diffusion sheet 142, the prism sheet 144 and the protection sheet 146. The BLU 100 enhances the efficiency of the light outputted from the optical film 140 by using the above process.

A reflective polarizer film layer 148 is manufactured by etching lines having a predetermined interval on a glass substrate. However, the interval should be formed in the microscopic unit, and thus it is difficult to correctly etch the lines on the glass substrate. As a result, much time is required for manufacturing the reflective polarizer film layer 148, and so it is difficult to produce massively the reflective polarizer film layer 148. Hence, a backlight unit which enhances the efficiency of a light without employing a reflective polarizer film layer has been required.

### SUMMARY OF THE INVENTION

It is a feature of the present invention to provide a prism sheet capable of transmitting some of a light incident thereto by forming a multilayered polarization layer thereon and a backlight including the same.

It is another feature of the present invention to provide a backlight unit not having a reflective polarizer film layer.

A prism sheet according to one embodiment of the present invention includes a prism and a polarization film. The polarization film is formed by depositing a first layer and a second layer on the prism, wherein the first layer and the second layer have different refractive index.

A prism sheet employed in a backlight unit according to another embodiment of the present invention includes a prism and a polarization film. The polarization film is formed by depositing first layers and second layers on the prism, wherein the first layer and the second layer have different refractive index, and are repeatedly laminated in turn.

A backlight unit employed in a liquid crystal display according to one embodiment of the present invention includes a diffusion sheet and a prism sheet. The diffusion sheet is formed on a light guiding plate. The prism sheet is formed on the diffusion sheet, and having prisms, wherein the prism sheet includes a polarization film formed by depositing a first layer and a second layer having different refractive index on the prisms.

As described above, a prism sheet includes a multilayered polarization film, and so transmits some of a light incident thereto by the polarization film.

Additionally, a backlight unit includes a prism sheet having polarization division function, and so extra reflective polarizer film layer is not required. Hence, cost for manufacturing the backlight unit is reduced, and the thickness of the backlight unit is reduced.

### BRIEF DESCRIPTION OF THE DRAWINGS

The above and other features and advantages of the present invention will become readily apparent by reference to the following detailed description when considered in conjunction with the accompanying drawings wherein:
FIG. 1 is a sectional view illustrating a backlight unit included in a liquid crystal display;
FIG. 2 is a sectional view illustrating a liquid crystal display including a backlight unit according to one embodiment of the present invention;
FIG. 3 is a sectional view illustrating the backlight unit according to one embodiment of the present invention;
FIG. 4 is a sectional view illustrating the prism sheet of FIG. 3;
FIG. 5A is a sectional view illustrating a general prism sheet;
FIG. 5B is a plane view illustrating a graph showing reflectivity of P wave and S wave depending on the incident angle of a light incident to the prism sheet;
FIG. 6A is a plane view illustrating a graph showing reflectivity of P wave and S wave when the incident angle of the light incident to the prism sheet is 0°; and
FIG. 6B is a plane view illustrating a graph showing reflectivity change of P wave and S wave when the incident angle of the light incident to the prism sheet is higher than 0°.

### DESCRIPTION OF EMBODIMENTS

Hereinafter, the preferred embodiments of the present invention will be explained in more detail with reference to the accompanying drawings.

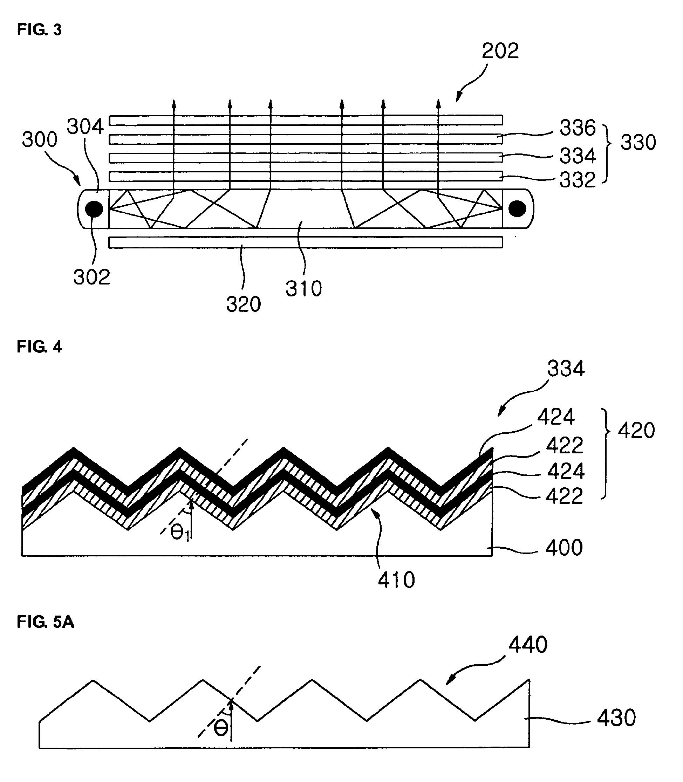

FIG. 2 is a sectional view illustrating a liquid crystal display including a backlight unit according to one embodiment of the present invention. FIG. 3 is a sectional view illustrating the backlight unit according to one embodiment of the present invention.

In FIG. 2, the liquid crystal display (hereinafter, referred to as "LCD") of the present invention includes a liquid crystal display panel (LCD panel) 200 and a backlight unit 202.

The LCD panel 200 includes a lower polarization film 204, an upper polarization film 206, a lower glass substrate 208, an upper glass substrate 210, a color filer 212, a black matrix 214, a pixel electrode 216, a common electrode 218, a liquid crystal layer 220 and a TFT array 222.

The color filer 212 includes sub-color filers corresponding to red, green and blue light, and generates image corresponding to red, green or blue colors when a certain voltage is applied to the LCD.

The TFT array 222 as a switching device switches the pixel electrode 216.

The pixel electrode 216 and the common electrode 218 array liquid crystals of the liquid crystal layer 220 in accordance with a certain voltage applied from the outside.

The liquid crystal layer 220 includes the liquid crystals, wherein the liquid crystals are arrayed in accordance with the voltage difference of the pixel electrode 216 and the common electrode 218. As a result, a light provided from a followed backlight unit (hereinafter, referred to as "BLU") 202 is incident to the color filer 212 depending on the array of the liquid crystals.

The BLU 202 is located under the LCD panel 200, and provides a light, for example white light to the LCD panel 200.

In FIG. 3, the BLU 202 includes a light source unit 300, a light guiding plate 310, a reflection sheet 320 and an optical film 330.

The light source unit 300 is located at the side of the BLU 202, and includes at least one cold fluorescent lamp (hereinafter, referred to as "CCFL") 302 and a reflection plate 304.

The CCFL 302 is a lamp emitting a bright white light, but not diffusing heat.

The reflection plate 304 seals the CCFL 302, and provides the light emitted from the CCFL 302 in the direction of the light guiding plate 310 to enhance the efficiency of the light. Here, the reflection plate 304 is made up of substance having high reflectivity. In addition, silver (Ag) may be coated on the reflection plate 304.

The reflection sheet 320 is located under the light guiding plate 310, and reflects the light emitted from the CCFL 302 in the direction of the light guiding plate 310. To enhance the reflectivity of the reflection sheet 320, silver (Ag) may be coated on a base which is made up of aluminum (Al), etc. In addition, titanium (Ti) may be coated on the base in order to prevent the heat deflection.

The light guiding plate 310 is designed so that the light provided from the light source unit 300 is totally reflected as shown in FIG. 3. Since the CCFL 302 is located at the side of the BLU 202, the light emitted from the CCFL 302 is focused to the edge of the BLU 202 without diffused through the its whole surface. Accordingly, to diffuse uniformly the light through the whole surface of the BLU 202, the light guiding plate 310 is formed in the BLU 202. The light guiding plate 310 is made up of transparent acryl resin such as Poly Methyl Meta Acrylate (hereinafter, referred to as "PMMA"). Here, the PMMA has high strength, and so is not easily broken and deflected. In addition, the PMMA is light and has high transmissivity over visible rays. The light guiding plate 310 outputs a light in the direction of the LCD panel 200.

The optical film 330 includes a diffusion sheet 332, a prism sheet 334 and a protection sheet 336.

The diffusion sheet 332 diffuses or condenses the light outputted from the light guiding plate 310. In particular, the diffusion sheet 332 diffuses or condenses the light outputted from the light guiding plate in accordance with an angle between the light and the normal line of the light guiding plate 310.

The prism sheet 334 condenses a part of the diffused or condensed light by the diffusion sheet 332 in the direction of the protection sheet 336, and reflects the other light in the direction of the light guiding plate 310 using reflective liquid crystals. Hereinafter, the elements included in the prism sheet 334 will be described in detail with reference to the accompanying drawings.

The protection sheet 336 is located over the prism sheet 334 to protect the prism sheet 334 from dust, etc., and enlarges a view angle narrowed by the prism sheet 334.

Hereinafter, a light-emitting process of the LCD will be described in detail.

Now referring to FIG. 2, the BLU 202 provides a plane light which is a white light to the LCD panel 200.

Subsequently, the TFT array 222 switches the pixel electrode 216.

Then, voltages having different magnitude are applied to the pixel electrode 216 and the common electrode 218, and so the liquid crystal layer 220 is arrayed corresponding to the red, green and blue sub-color filters. In this case, the plane light provided from the BLU 202 passes the liquid crystal layer 220 so that amount of the plane light is adjusted, and then the adjusted plane light is provided to the color filter 212. As a result, a certain image is displayed by combing light through the red, green and blue sub-color filters.

Hereinafter, the prism sheet 334 employed in the BLU 202 will be described in detail.

FIG. 4 is a sectional view illustrating the prism sheet of FIG. 3.

In FIG. 4, the prism sheet 334 includes a prism base 400, prisms 410 and a polarization film 420.

The prism base 400 enhances heat resisting characteristics and bending characteristics of the prism sheet 334.

The prisms 410 may be easily formed due to the prism base 400 included in the prism sheet 334.

The polarization film 420 is formed by depositing a first layer 422 and a second layer 424 on the prism 410, wherein the first layer 422 and the second layer 424 have different refractive index. The polarization film 420 according to another embodiment of the present invention is formed by laminating repeatedly the first layers 422 and the second layers 424 in turn as shown in FIG. 4. Here, it is desirable that the first layer 422 is made up of a substance having high refractive index, and the second layer 424 is made up of a substance having low refractive index. Surely, the first layer 422 may be made up of a substance having low refractive index, and the second layer 424 may be made up of a substance having high refractive index.

The polarization film 420 reflects a part of a light diffused by the diffusion sheet 336 in the direction of the light guiding plate 310, and provides the other light to the LCD panel 200.

Hereinafter, the operation of the polarization film 420 will be described in detail.

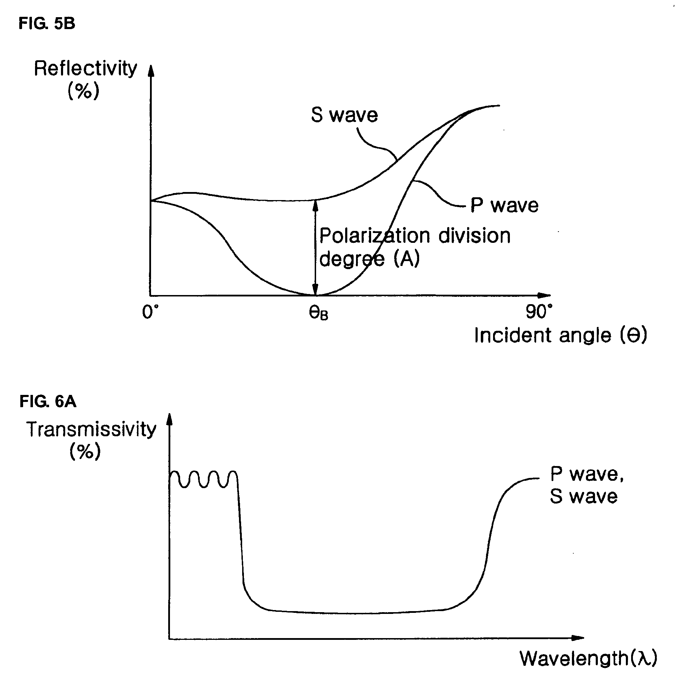

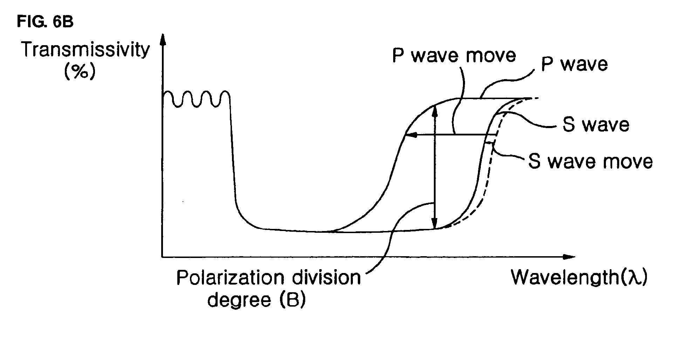

FIG. 5A is a sectional view illustrating a general prism sheet, and FIG. 5B is a plane view illustrating a graph showing reflectivity of P wave and S wave depending on the incident angle of a light incident to the prism sheet. FIG. 6A is a plane view illustrating a graph showing transmissivity of P wave and S wave when the incident angle of the light incident to the prism sheet is 0°, and FIG. 6B is a plane view illustrating a graph showing transmissivity change of P wave and S wave when the incident angle of the light incident to the prism sheet is higher than 0°.

In FIG. 5A, the general prism sheet includes a prism base 430 and prisms 440. In case that a light is incident to the prism sheet which is made up of single medium, a reflective angle is changed depending to an incident angle (θ).

In FIG. 5B, the reflectivity of P wave and S wave are changed depending on the incident angel (θ). In case that the incident angle (θ) is about 0° or 90°, the reflectivity of the P wave is substantially identical to that of the S wave. In case that the incident angle (θ) is between 0° and 90°, the reflectivity of the P wave is reduced. Particularly, the reflectivity of the P wave is suddenly reduced at the incident angle (θ) corresponding to Brewster angle (θ*_{B}*). When the light is incident to the prism sheet with an incident angle corresponding to the Brewster angle (θ*_{B}*), some of the S wave is reflected in the direction of the light guiding plate 310, and most of the P wave is outputted through the prism sheet. In other words, polarization division phenomenon is occurred. However, since the prism sheet which is made up of single medium reflects only some of the S wave, polarization division degree (A) is low. Accordingly, to enhance the polarization division function, the polarization is formed by laminating alternatively the first layer 422 and the second layer 424 on the prism 410 as shown in FIG. 4. In this case, the reflectivity of the light incident to the prism sheet may be controlled in accordance with Admittance Diagram theory. Here, the number of laminating is set by referring to polarization division degree (A).

In prism sheet 334 including the multilayered polarization film 420, the polarization division function depends on the incident angle of the light incident to the prism sheet 334. In case that the incident angle (θ1) of the light incident to the prism sheet 334 is 0°, the transmissivity of the P wave is identical to that of the S wave as shown in FIG. 6A. Namely, the prism sheet 334 does not perform the polarization division function. In case that the incident angle (θ1) is gradually augmented, a curve showing the transmissivity of the P wave is moved to left comparing to a curve showing the transmissivity of the S wave as shown in FIG. 6B. Hence, the polarization division phenomenon is occurred in a specific wavelength area, for example in visible ray area of about 400λ to 700λ. A polarization division degree (B) is enhanced compared to the polarization division degree (A) corresponding to the prism sheet which is made up of single medium.

The incident angle (θ1) incident to the prism sheet 334 according to one embodiment of the present invention is about between 35° and 55°, preferably 45°.

In short, the polarization film 420 outputs the P wave of the light diffused by the diffusion sheet 336 in the direction of the LCD panel 200, and reflects the S wave of the light diffused by the diffusion sheet 336 in the direction of the light guiding plate 310. The S wave reflected by the polarization film 420 is reflected again by the light guiding plate 310 or the reflection sheet 320. In this case, the light reflected again by the light guiding plate 310 or the reflection sheet 320 includes P wave and S wave in accordance with physical characteristics of a light. In other words, the S wave reflected by the polarization film 420 is changed into the light including the P wave and the S wave by reflected again by the light guiding plate 310 or the reflection sheet 320.

Subsequently, the changed light is incident to the polarization film 420 through the diffusion sheet 332. As a result, the P wave of the changed light is transmitted through the polarization film 420 in the direction of the LCD panel 200, and the S wave is reflected in the direction of the light guiding plate 310.

Then, the reflected light is reflected again by the light guiding plate 310 or the reflection sheet 320, and so is changed into a light including P wave and S wave.

The BLU 202 enhances the efficiency of the light by repeating the above process.

In addition, since the prism sheet 334 performs polarization function as well as condensing function, extra reflective polarizer film layer is not required.

From the preferred embodiments for the present invention, it is noted that modifications and variations can be made by a person skilled in the art in light of the above teachings. Therefore, it should be understood that changes may be made for a particular embodiment of the present invention within the scope and the spirit of the present invention outlined by the appended claims.

## Claims

1. A prism sheet employed in a backlight unit comprising:
a prism; and
a film formed by depositing a first layer and a second layer on the prism,
wherein the first layer and the second layer have different refractive index.

2. The prism sheet of claim 1, wherein the first layer is made up of a substance having high refractive index, and the second layer is made up of a substance having low refractive index.

3. A backlight unit employed in a liquid crystal display comprising:
a diffusion sheet formed on a light guiding plate; and
a prism sheet formed on the diffusion sheet, and having prisms,
wherein the prism sheet includes a film formed by depositing a first layer and a second layer having different refractive index on the prisms.

4. The backlight unit of claim 3, wherein the first layer is made up of a substance having high refractive index, and the second layer is made up of a substance having low refractive index.

5. The backlight unit of claim 3, wherein the film reflects a part of a light incident from the diffusion sheet in the direction of the light guiding plate.

6. A prism sheet employed in a backlight unit comprising:
a prism; and
a film formed by depositing first layers and second layers on the prism,
wherein the first layer and the second layer have different refractive index, and are repeatedly laminated in turn.

7. The prism sheet of claim 6, wherein the first layer is made up of a substance having high refractive index, and the second layer is made up of a substance having low refractive index.
